Europäisches Patentamt

European Patent Office

Office européen des brevets

(11) Publication number: **0 144 088**
**A1**

## (12) EUROPEAN PATENT APPLICATION

(21) Application number: **84114567.5**

(51) Int. Cl.⁴: **G 06 K 11/06**

(22) Date of filing: **30.11.84**

(30) Priority: **01.12.83 US 556892**

(43) Date of publication of application:
**12.06.85 Bulletin 85/24**

(84) Designated Contracting States:
**BE DE FR GB**

(71) Applicant: **WANG LABORATORIES INC.**
One Industrial Avenue
Lowell, MA 01851(US)

(72) Inventor: **Kibler, Tom Roy**

Groton Massachusetts(US)

(74) Representative: **Behrens, Dieter, Dr.-Ing. et al,**
Patentanwälte WUESTHOFF-V.
PECHMANN-BEHRENS-GOETZ Schweigerstrasse 2
D-8000 München 90(DE)

(54) Pointer apparatus for display devices.

(57) An apparatus to enable pointing to a selected part of a displayed image, the image comprising relatively brighter areas and relatively darker areas displayed in a time sequence determined by sequencing circuitry, the apparatus having a transparent, deformable sheet located between the image and a viewer of the image, the sheet being arranged to conduct light from the image to the periphery of the sheet, the amount of the light conducted from the selected part being changed when the sheet is deformed at a location corresponding to the selected part, a light sensor arranged to receive the light conducted to the periphery, and identifier circuitry responsive to the light sensor and to the sequencing circuitry for identifying the selected part based on a comparison of the time when the change in the amount of the light is sensed at the sensor with the times when the respective brighter and darker areas are displayed.

Croydon Printing Company Ltd.

— 1 —

Pointer apparatus for display devices

This invention relates to a pointer apparatus for display
devices for pointing to a selected part of the image displayed on such a device.

Typical information display devices (such as cathode ray
tubes (CRTs) used in computer terminals), display
controllable patterns of visible light on the screen of the
device to represent information.  For example, alphanumeric
characters can be displayed by raster scanning the CRT
electron beam path to cause it to trace closely spaced
horizontal lines across the phosphor-coated inner surface of
the screen.  During the scanning, the intensity of the beam
is modulated according to a pattern corresponding to the
configuration of each symbol (e.g., character) or graphic to
be desplayed, and the phosphorescent light triggered by the
modulated beam is visible to the user.

Computer terminals usually include apparatus, such as keyboard-controlled cursors, with which the user may point to a
selected displayed symbol or graphic with respect to which
some desired action is to be performed, e.g., deleting or
changing the selected symbol or graphic.

Another pointer apparatus is a light-pen which can be
pointed at the face of the screen at the location where the
selected symbol or graphic is being displayed.  The computer terminal identifies the selected symbol or graphic by determining the precise time during the raster scan when the light-pen sensor receives the light representing that symbol or graphic. From that time measurement, the precise location on the screen at which the light-pen is aimed can be determined.

In other pointer apparatus, two sets of evenly spaced sources of infrared beams are arranged respectively near the top and left edges of the screen, and are aimed so that the beams of each set follow parallel paths across the front of the face of the screen. Two sets of infrared sensors are arranged respectively on the bottom and right side of the screen and are aimed to receive the corresponding beams. Thus a grid of horizontal and vertical infrared beams is superimposed in front of the face of the screen. When the screen is touched at the location of the selected symbol or graphic, one or more of each of the horizontal and vertical beams are blocked. From the sensors corresponding to those beams, the computer terminal can determine the coordinates of the touched location, and thus identify the designated symbol or graphic. The resolution of such a pointer apparatus is governed by the spacing between adjacent beams.

It is an object of the invention as defined by the appendent claims to devise a pointer apparatus for pointing to a selected part of a displayed image, the image including relatively brighter areas and relatively darker areas displayed in a time sequence determined by sequencing circuitry, which obviates the countersome handling of key-controlled cursors and the restrictions to resulution of intrazed-sensor-controlled pointers.

The pointer apparatus according to the invention includes a transparent, deformable sheet located between the image and a viewer of the image, the sheet being arranged to conduct light from the image to the periphery of the sheet, the amount of the light conducted from the selected part of the image being changed when the sheet is deformed at a location corresponding to the selected part, a light sensor arranged to receive the light conducted to the periphery, and identifier circuitry responsive to the light sensor and to the sequencing circuitry for identifying the selected part based on a comparison of the time when the change in the amount of the light is sensed at the sensor with the times when the respective brighter and darker areas are displayed.

In preferred embodiments the amount of light conducted to the periphery of the sheet from the selected part increases when the sheet is deformed at the location corresponding to the selected part; the deformable sheet has optical characteristics such that, when deformed at the location, at least some light from the selected part is internally reflected to the periphery of the sheet; the internally reflected light differs in amount from the quantity of light internally reflected from the selected part to the periphery when the sheet is not deformed at the location; the image is desplayed on a screen of a cathode ray tube; the image is displayed on a display surface and the sheet is overlaid on the surface; the displayed images have symbols (e.g., alphanumeric characters) and graphics and the selected part includes one symbol or graphic; and the brighter areas have dots.

The viewer can easily and quickly point to any selected part of the displayed image by touching the display with his finger or a blunt pointer; the selected part can be identified with relatively high resolution; the viewer needs no special hand-held equipment for pointing; and the apparatus is inexpensive and reliable, and can be readily added to available display devices (such as cathode ray tubes for computer terminals).

Other advantages and features of the invention will be apparent from the following description of the preferred embodiment, and from the claims.

An embodiment of the new pointer apparatus according to the invention is explained with the aid of a drawing, in which

Fig.1     is a pointer apparatus on a CRT display device,

Fig.2     is an enlarged side sectional view, partially broken apart, of a portion of the screen of the CRT of Fig.1 and

Fig.3     is a block diagram of the sequencing and identifier circuitries of Fig.1.

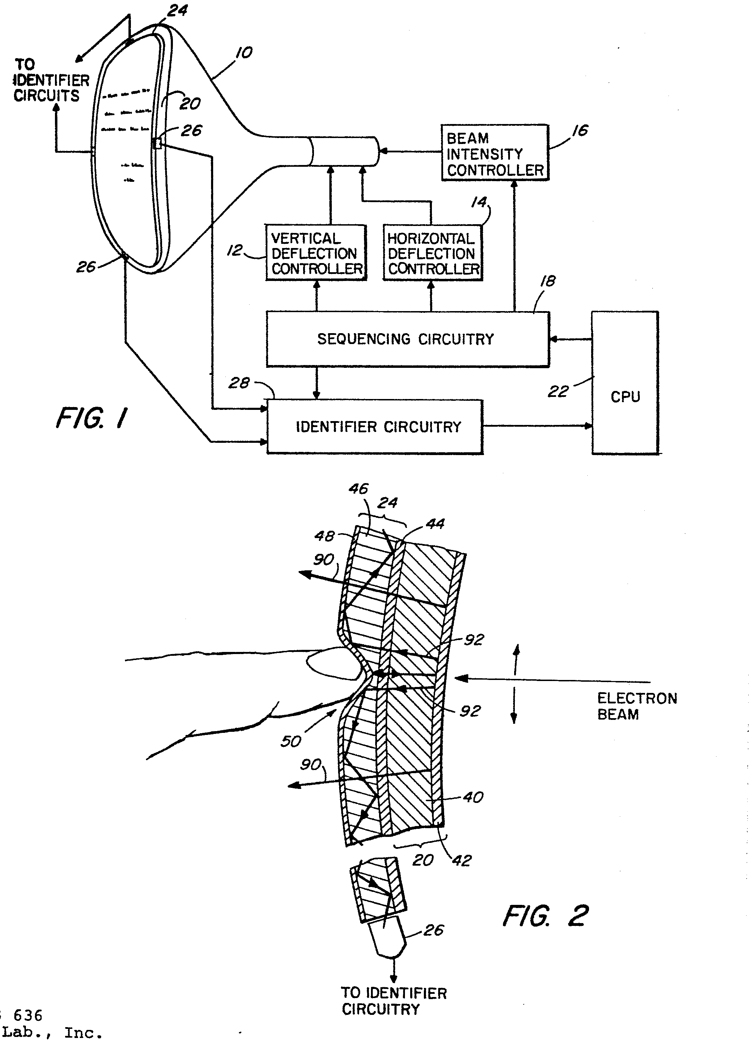

Referring to Fig.1, cathode ray tube (CRT) 10 is connected to vertical and horizontal deflection controllers 12, 14 (for controlling the path of the CRT's electron beam), and to beam intensity controller 16 (for controlling the intensity of the beam). The three controllers 12, 14, 16 are connected to sequencing circuitry 18 for coordinating over time the path and intensity (e.g., off, normal, high) of the beam to generate a displayed image on the screen (i.e., display surface) 20 of CRT 10. The displayed image comprises a pattern of relatively darker areas and relatively brighter areas (such as dots of light which make up displayed symbols or graphics). Sequencing circuitry 18 is connected to CPU 22 (part of an interactive computer terminal) for providing signals corresponding to the identities, positions, and intensities on screen 20 of symbols (e.g., alphanumeric characters) and graphics which comprise the image displayed to the viewer at a given time.

A transparent deformable sheet 24 is overlaid on and attached to the front surface of screen 20. Four light sensors 26 (positioned on the four sides of the periphery of sheet 24) are connected to identifier circuitry 28 (which is also connected to sequencing circuitry 18) for determining the identity and location on the screen of a symbol or graphic selected by the viewer. The output of identifier circuitry 28 is connected to CPU 22. Sheet 24, sensors 26, and identifier circuitry 28 together comprise apparatus for pointing to a selected symbol or graphic of the image displayed on CRT 10.

Referring to Fig. 2, in screen 20 of CRT 10, glass envelope 40 has a phosphor coating 42 on its inner surface. Deformable sheet 24 is an integral sandwich of three layers. Layer 44 (nearest to the surface of glass envelope 40) is transparent and sufficiently flexible to conform to the contour of screen 20. Layer 46 (adjacent layer 44) is transparent and sufficiently flexible to conform to the contour of layer 44. Layer 48 is transparent, sufficiently flexible to conform to the contour of layer 46, and has a sufficiently strong outer surface to prevent penetration by objects such as pencil points when normal pressure is being applied. Sheet 24 has resilience characteristics such that a local region (e.g. region 50) is deformed by pressing a finger or blunt pointer against sheet 24, and such that after deformation, sheet 24 returns rapidly and completely to its original form. The relative indices of refraction of layers 44, 46, 48 are such that light carried within layer 46 and striking the interface between layers 44 and 46 or the interface between layers 46 and 48 at less than a predetermined threshold angle is internally reflected in layer 46 and conducted to the periphery of sheet 24 (as in an optical fiber) but light striking either interface at more than the predetermined angle is passed uninterrupted across the interface.

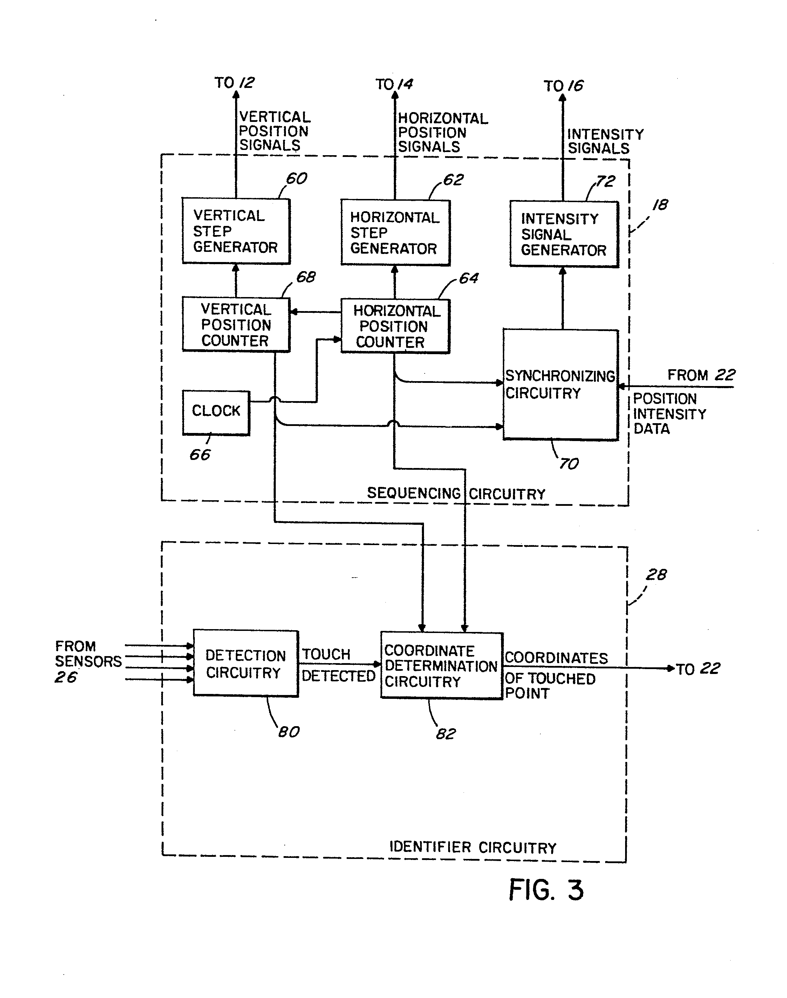

Referring to Fig. 3, in sequencing circuitry 18, vertical and horizontal step generators 60, 62 are respectively connected to provide vertical and horizontal position signals to controllers 12, 14. Horizontal position counter 64 is connected to send counts corresponding to a succession of positions along each scan line to horizontal step generator 62, based on clock signals from clock 66. Vertical position counter 68 is connected to send counts corresponding to a succession of horizontal scan lines to vertical step generator 60, based on a sequence of signals from counter 64 (sent from counter 64 each time it turns over to zero). Synchronizing circuitry is connected to both counters 64, 68 and to CPU 22 (from which it receives signals indicating the proper beam intensity for each position on each scan line of the displayed image). Intensity signal generator 72 has its input connected to circuitry 70 to receive beam intensity data at the proper times, and its output to controller 16 for delivering intensity signals.

In identifier circuitry 28, detection circuitry 80 is connected to sensors 26 and is arranged to sense the ambient light level detected by sensors 26, and to provide a signal to coordinate determination circuitry 82 whenever the light level detected by sensors 26 changes from the ambient light level, indicating that the sheet 24 is deformed. Coordinate determination circuitry 82 is connected to counters 64, 68 and is arranged to deliver the coordinates of the touched location on sheet 24 to CPU 22. The sequencing and identifying circuitry 18, 28 could be implemented by conventional techniques either by hard-wired circuitry or by a programmed microprocessor.

Operation

Referring to Fig. 2, when the viewer is not touching sheet 24, light rays (e.g., rays 90) emanating from areas of phosphor coating 42 pass directly through sheet 24. A relatively small amount of light from phosphor coating 42 and from room light is internally conducted by layer 46 to sensors 26 and produces an ambient light signal level at the outputs of sensors 26.

When the viewer wishes to point to a displayed symbol or graphic (for example a letter which he wishes to delete from a line of text), he pushes on and deforms sheet 24 at the location (e.g., location 50) where that letter is displayed. Some of the light rays 92 from dots which form that letter are internally reflected at the interface between layers 46, 48 and are conducted by repeated internal reflection to the periphery of sheet 24, where they are received by sensors 26. Thus, at the instants when rays 92 are received at sensors 26, the output signals of sensors 26 rise above the ambient level (indicating that the screen has been touched). Detection circuitry 80 determines when those instants occur and sends to coordinate determination circuitry 82 signals indicating that sheet 24 has been touched. Circuitry 82 compares the times of touching with the outputs of counters 64, 68 to determine the precise point or region of the display which was being scanned when the internally reflected rays 92 were conducted to sensors 26. Circuitry 82 sends to CPU 22 signals which indicate the coordinates of that point or region, from which CPU 22 can determine the symbol or graphic which is being displayed at that point or region.

The viewer can easily and quickly point to any selected part of the displayed image by touching the display; the selected part can be identified with relatively high resolution; the viewer needs no special hand-held equipment for pointing; and the apparatus is inexpensive and reliable, and can be readily added to available display devices.

Other embodiments are within the following claims. For example, sheet 24 could be used with display screens other than CRTS; a different number and arrangement of sensors 26 could be used; and the detection circuitry could be arranged to also detect when the light level detected at sensors 26 falls below the ambient light level.

CLAIMS:

1.  Pointer apparatus for a display device to enable pointing to a selected part of a displayed image, said image comprising a pattern, especially symbols and graphics and/or alphanumeric characters of relatively brighter areas, especially dots, and relatively darker areas displayed in a time sequence determined by sequencing circuitry (18), c h a r a c t e r i z e d  in that a transparent, deformable sheet (24) is located between the image and a viewer of the image, which is arranged for conducting light from the image to the periphery of the sheet, the amount of such light conducted from the selected part of the image being changed when the sheet is deformed at a location (50) corresponding to the selected part, a light sensor (26) arranged to receive the light conducted to the periphery, and identifier circuitry (28) responsive to the light sensor (26) and to the sequencing circuitry (18) for identifying the selected part based on a comparison of the time when the change in the amount of the light is sensed at the sensor with the times when the respective brighter and darker areas are displayed.

2.  The apparatus of claim 1, c h a r a c t e r i z e d  in that the amount of light conducted to the periphery of the sheet (24) from the selected part increases when the sheet (24) is deformed at the location corresponding to the selected part.

3.    The apparatus of claim 1 or 2,
c h a r a c t e r i z e d  in that
the deformable sheet (24) has optical characteristics such
that, when deformed at said location (50), at least some
light from the selected part is internally reflected to the
periphery of the sheet (24).

4.    The apparatus according to any of claims 1 to 3,
c h a r a c t e r i z e d  in that
the internally reflected light differs in amount from the
quantity of light internally reflected from the selected
part to the periphery of the sheet when the sheet is not
deformed at the location.

5.    The apparatus according to any of claims 1 to 4,
c h a r a c t e r i z e d  in that
the identifier circuitry (28) comprises an ambient light
detector for determining the amount of light detected by the
sensor (26) when the sheet (24) is not being deformed.

6.    The apparatus according to any of the preceding claims,
c h a r a c t e r i z e d  by
a plurality of light sensors (26).

7.    The apparatus according to any of claims 1 to 6,
c h a r a c t e r i z e d  in that
the sheet (24) is overlaid on a display surface onto which
the image is displayed.

8.    The apparatus according to claim 7,
c h a r a c t e r i z e d  in that
the display surface is the screen of a cathode ray tube
(10).

9.   The apparatus according to claims 3 or 4,
c h a r a c t e r i z e d   in that
the deformable sheet (24) is an integral sandwich of three
layers (44, 46, 48) the relative indices of refraction are
such that light carried within the center layer (46) strikes
the interfaces between the center layer (46) and the
adjacent layers (44, 48) under an angle which is less than a
threshold angle so as to be conducted to the periphery of
the sheet (24).

1028

FIG. 1

FIG. 2

ELECTRON BEAM

TO IDENTIFIER CIRCUITRY

TO *12*

VERTICAL
POSITION
SIGNALS

TO *14*

HORIZONTAL
POSITION
SIGNALS

TO *16*

INTENSITY
SIGNALS

*60*

VERTICAL
STEP
GENERATOR

*62*

HORIZONTAL
STEP
GENERATOR

*72*

INTENSITY
SIGNAL
GENERATOR

*18*

*68*

VERTICAL
POSITION
COUNTER

*64*

HORIZONTAL
POSITION
COUNTER

SYNCHRONIZING
CIRCUITRY

FROM *22*

POSITION
INTENSITY
DATA

CLOCK

*66*

*70*

SEQUENCING CIRCUITRY

*28*

FROM
SENSORS
*26*

DETECTION
CIRCUITRY

TOUCH
DETECTED

COORDINATE
DETERMINATION
CIRCUITRY

COORDINATES
OF TOUCHED
POINT

TO *22*

*80*

*82*

IDENTIFIER CIRCUITRY

FIG. 3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | IBM TECHNICAL DISCLOSURE BULLETIN, vol. 24, no. 2, July 1981, pages 1130-1131, New York, US; J.D. CROW: "CRT display position indicator" * Whole article * | 1-8 | G 06 K 11/06 |
| Y | IDEM | 9 | |
| X | IBM TECHNICAL DISCLOSURE BULLETIN, vol. 24, no. 6, November 1981, pages 2732-2733, New York, US; R.H. HARRIS: "Optical overlay input device for a cathode ray tube" * Whole article * | 1-8 | |
| Y | IDEM | 9 | **TECHNICAL FIELDS SEARCHED (Int. Cl.4)** |
| A | GB-A-2 074 428 (WESTERN ELECTRIC CO. INC.) * Figures 1-6; page 1 - page 2, line 93 * | 1-8 | G 06 K<br>G 06 F |
| A | US-A-4 305 071 (BELL et al.) * Figures 1-13; column 1, line 6 - column 2, line 33; column 2, line 65 - column 3, line 60; claims 1-4 * | 1-8 | |

-/-

The present search report has been drawn up for all claims

| Place of search | Date of completion of the search | Examiner |
|---|---|---|
| THE HAGUE | 08-03-1985 | BECKER K.H. |

European Patent Office

## DOCUMENTS CONSIDERED TO BE RELEVANT

| Category | Citation of document with indication, where appropriate, of relevant passages | Relevant to claim | CLASSIFICATION OF THE APPLICATION (Int. Cl 4) |
|---|---|---|---|
| A | US-A-3 505 561 (MASSACHUSETTS INSTITUTE OF TECHNOLOGY) * Figure 6; column 1, line 29 - column 2, line 13 * | 1 | |

-----

TECHNICAL FIELDS SEARCHED (Int. Cl.4)

The present search report has been drawn up for all claims

| Place of search | Date of completion of the search | Examiner |
|---|---|---|
| THE HAGUE | 08-03-1985 | BECKER K.H. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82